# EUROPÄISCHE PATENTSCHRIFT

(11) **EP 4 225 573 B1**
(45) Veröffentlichungstag und Bekanntmachung des Hinweises auf die Patenterteilung: **31.07.2024**
(21) Anmeldenummer: 21798295.8
(22) Anmeldetag: 11.10.2021
(51) Int. Cl.: B32B 3/26, B32B 27/30, B32B 27/32, B32B 27/08, B32B 21/08, B32B 15/082, B32B 15/085

(54) **UV SCHUTZFOLIE FÜR DEN AUSSENBEREICH**
UV PROTECTION FILM FOR USE OUTDOORS
FILM DE PROTECTION CONTRE LES UV DESTINÉ À ÊTRE UTILISÉ À L'EXTÉRIEUR

(30) Priorität: 12.10.2020 DE 102020126708; 01.12.2020 DE 102020131858
(43) Veröffentlichungstag der Anmeldung: 16.08.2023
(73) Patentinhaber: Renolit SE, 67547 Worms (DE)
(72) Erfinder: STRUVE, Friedrich-Wilhelm, 83024 Rosenheim (DE); SAGERER, David, 68167 Mannheim (DE); ROESSLE, Martin, 55129 Mainz (DE)
(74) Vertreter: Zellentin & Partner mbB Patentanwälte
(86) Internationale Anmeldenummer: PCT/EP2021/078028
(87) Internationale Veröffentlichungsnummer: WO 2022/078946

(56) Entgegenhaltungen:
- EP-A1- 3 288 688
- EP-B1- 3 288 688
- WO-A1-2012/084823
- WO-A1-2016/010472
- WO-A1-2016/030215
- CN-U- 205 774 262
- CN-U- 205 774 262
- DE-A1- 102018 005 880
- US-A1- 2018 162 108
- US-A1- 2018 162 108
- US-A1- 2021 053 322
- US-B2- 9 725 911

## Beschreibung

Die vorliegende Erfindung betrifft UV Schutzfolien für den Außenbereich, speziell zur Beschichtung von Bauelementen wie Bodenbelägen, insbesondere von Terassendielen, die zur Nutzung im Freien bestimmt sind.

Ein wichtiger Trend in den letzten Jahren sind wertig aussehende Bauelemente für den Außenbereich. Immer mehr Menschen gestalten Terassen, Balkone und Sitzplätze im Freien als weiteren "Wohnraum". Dazu gehören neben entsprechendem Mobiliar auch wohnliche Bodenbeläge, Sichtschutzelemente, Zäune, Pflanzkästen und vieles mehr. Zwar ist die Optik von Naturstein und Holz weitgehend bevorzugt, aber es werden pflegeleichtere Oberflächen verlangt.

Diese Anforderungen lassen sich durch Kunststoffe vereinbaren. Neben dem Einsatz von massivem Kunststoff, in jüngerer Zeit auch sog. WPC-Materialien (wood plastic composite), ist es seit langem bekannt, Substrate zu beschichten. Das ist auch bei Elementen wie Wänden oder Zäunen sehr erfolgreich. Bei Bodenbelägen ist jedoch bisher die Widerstandsfähigkeit nicht ausreichend und/oder es kommt zu anderen Mängeln. So haben die von Möbeln und Fußbodenpaneelen für den Innenbereich bekannten Laminierfolien im Außenbereich unter anderem das Problem, dass Dekorpapiere aufgrund mangelnder UV-Schutzwirkung der oberen Schicht(en) ausbleichen und die Oberfläche oft zu glatt ist, so dass die für Böden im Außenbereich erforderliche Rutschsicherheit nicht erreicht Somit besteht weiter die Aufgabe, pflegeleichte und dauerhafte Oberflächen mit gewünschter Optik für den Außenbereich bereitzustellen. US 2018/162108 A1 offenbart eine UV Schutzfolie zur Herstellung von beschichteten Bauelementen für den Außenbereich durch Laminierung der Schutzfolie auf Bauelemente, wobei die Schutzfolie eine Basisfolie aus Polyvinylchlorid, Polyacrylat oder Polyethylen, ein gedrucktes Design, eine abriebbeständige Schmelzbeschichtung auf Polyurethanbasis umfassend UV Absorber und optional Füllstoffe, und einen Polyurethanlack umfasst.

Überraschend wurde nun gefunden, dass bedruckte Basisfolien aus PVC, Polyacrylat oder Polyolefin, die mit einer abriebbeständigen Schmelzbeschichtung auf Polyurethanbasis versehen und lackiert werden, einen wirksamen UV Schutz aufweisen und damit die notwendige Dauerhaftigkeit des Druckdesigns erreicht wird. Die Rutschsicherheit wird durch eine Prägung in Kombination mit der abriebbeständigen PUR-Schmelzbeschichtung gewährleistet. Die Prägung ist in einer bevorzugten Variante besonders einfach durch eine geprägte Zwischenschicht unterhalb der PUR-Schmelzbeschichtung erhältlich.

Die obige Aufgabe wird somit durch eine UV Schutzfolie nach Anspruch 1 gelöst, die umfasst
- eine Basisfolie aus PVC, Polyacrylat oder Polyolefin,
- ein gedrucktes Design und/oder eine Einfärbung der Basisfolie,
- eine geprägte Zwischenschicht umfassend eine Reaktivschmelzmasse auf Polyurethanbasis
- eine abriebbeständige Schmelzbeschichtung auf Polyurethanbasis, und
- einen Lack und/oder eine Polymerschutzschicht.

Außerdem wird die Aufgabe durch ein Verfahren zur Herstellung von beschichteten Bauelementen nach Anspruch 9 gelöst, bei dem diese UV Schutzfolie mit einem Substrat laminiert wird, durch die Verwendung der UV Schutzfolie zum Beschichten von Substraten und durch ein Verfahren zur Herstellung von UV Schutzfolien, bei dem eine Basisfolie aus PVC, Polyacrylat oder Polyolefin mit einem Design bedruckt wird und/oder eingefäbt ist, eine Schmelzbeschichtung auf Polyurethanbasis und darüber ein Lack und/oder eine Polymerschutzschicht aufgebracht wird, wobei eine Schicht unterhalb des Lacks geprägt wird.

Die erfindungsgemäßen UV Schutzfolien haben einen mindestens vierschichtigen Aufbau. Weitere Schichten sind möglich, z.B. ein Primer auf der Unterseite der Basisfolie. Die Schichten der UV Schutzfolie können jeweils unabhängig voneinander aus mehreren Lagen bestehen. Beispielsweise können dicke Schichten durch mehrmaliges Aufrakeln des Materials erhalten werden oder eine Basisfolie durch Coextrusion hergestellt sein. Die Lagen können identisch oder unterschiedlich zusammengesetzt sein.

Im Rahmen der vorliegenden Erfindung meint unten, unterhalb, Unterseite usw. diejenige Fläche einer Schicht, die dem Substrat zugewandt bzw. näher am Substrat ist. Oben, oberhalb und Oberseite bezeichnet eine vom Substrat abgewandte bzw. weiter entfernte Lage, die oberste Fläche der UV Schutzfolie bildet die Gebrauchsoberfläche des Bauelements.

Als untere Schicht ist eine bedruckbare Basisfolie vorgesehen. Diese muss einerseits beim Laminieren mit dem Substrat eine ausreichende Haftung herstellen, andererseits verleiht sie der UV Schutzfolie als Träger während der Herstellung und Verarbeitung die notwendigen mechanischen Eigenschaften.

Geeignete Materialien für die Basisfolie sind PVC (Polyvinylchlorid), Polyacrylate und Polyolefine. Diese weisen entweder als solches, zumindest aber mit an sich bekannten Additiven, eine gute UV-Stabilität auf. Zudem sind sie sehr gut gegen Hydrolyse und Thermolyse beständig.

Die Verbindung mit dem Substrat erfolgt in der Regel über eine Kleberlaminierung, z.B. mittels Polyurethanhotmeltkleber. Zur Optimierung der Haftung kann die Basisfolie unterseitig mit einem Primer versehen werden. Beispielsweise ist ein Primer auf Basis von Vinylchlorid-Vinylacetat-Copolymer für PVC, Polyacrylat und PVC-Polyacrylat Folien gut geeignet. Für Polyolefinfolien eignet sich u.a. ein 2-Komponenten Polyurethanprimer. Die Basisfolie kann alternativ oder zusätzlich einer Plasmastrahlung oder Koronabehandlung oder anderen Oberflächenbehandlung unterzogen werden.

Eine PVC-Basisfolie enthält vorzugsweise neben dem Polyvinylchlorid einen Stabilisator, Verarbeitungshilfsmittel, UV-Absorber, ein Antistatikum und Pigmente. Bevorzugt sind auch Modifier, insbesondere Polyacrylat, und epoxidiertes Sojabohnenöl enthalten. Als Stabilisator hat sich besonders Zinn bewährt, ebenso sind BaZn und CaZn brauchbar. Zinn wird vorzugsweise in Kombination mit Phosphit als Costabilisator verwendet. Bei den Verarbeitungshilfsmitteln handelt es sich beispielsweise um polymere Fließhilfen, z.B. auf Basis von MMA, BA, Styrol. Außerdem können PVC Folien mit Polymerweichmacher und mit Copolymer - insbesondere auf Basis von Vinylchlorid und Acrylaten - verwendet werden.

Der PVC Anteil beträgt typischerweise 70 Gew.-% bis 85 Gew.-%. Der Weichmacheranteil liegt in der Regel bei bis zu 30 Gew.-%, kann aber durch geeignete Rohstoffergänzungen bzw. alternative Rohstoffe wie zum Beispiel Copolymere ganz oder teilweise ersetzt werden. Ein Baustein in der Rezeptur kann recyceltes Material sein. Die Menge kann auf bis zu 20 Gew.-% gesetzt werden, bevorzugt sind bis zu 5 Gew.-%. Das eingebrachte Material kann dabei von gleicher oder leicht abgeänderter Rezeptur sein.

Polyacrylat-Basisfolien können vorzugsweise aus Methylmethacrylat (MMA), Butylacrylat (BA) und/oder Ethylacrylat (EA) sein, insbesondere werden Copolymere aus zwei, besonders bevorzugt aus allen drei der genannten Monomere eingesetzt. Die Basisfolie enthält außerdem üblicherweise ein oder mehrere von UV Absorbern z.B. auf Benzotriazolbasis, Antioxidationsmitteln wie beispielsweise phenolischen Antioxidationsmitteln, Lichtstabilisatoren, bevorzugt HALS, und Pigmenten. Außerdem können Verarbeitungshilfen auf Basis Polyacrylat enthalten sein.

Polyolefin-Basisfolien können bevorzugt aus Polyethylen, Polypropylen oder Olefin-Copolymeren sein. Die Folien können Füllstoff enthalten, z.B. Kreide, und die üblichen Additive. Beispielsweise kann die Polyolefin-Basisfolie je 100 Gewichtsteile Polyolefin oder Polyolefinlegierung, vorzugsweise Propylenhomopolymerisat oder Polyethylen hoher Dichte (HDPE), 25 bis 120 Gewichtsteile eines feinteiligen mineralischen Füllstoffes oder mineralischen Füllstoffgemisches, vorzugsweise Calciumcarbonat, Erdalkalioxide, Mikrotalcum, Kaolin, Silicate, Magnesium-Aluminium-Oxy- oder -Hydroxy-Carbonate und/oder Silicate und/oder Kieselsäuregel mit einem mittleren Körnungsdurchmesser unter 10 µm, vorzugsweise von 0,05 bis 5 µm, enthalten. Nach einer anderen Ausführungsform enthält die Polyolefin-Basisfolie je 100 Gewichtsteile Polyolefin oder Polyolefinlegierung, vorzugsweise Propylenhomopolymerisat oder HDPE, 5 bis 40 Gewichtsteile (bezogen auf 100 Gewichtsteile Polyolefin), vorzugsweise 10 bis 30 Gewichtsteile, mindestens eines feinteiligen organischen Füllstoffes oder Kombinationen dieser Gewichtsmengen organischer Füllstoffe mit 0 bis 30 Gewichtsteilen, vorzugsweise 5 bis 25 Gewichtsteilen, mindestens eines feinteiligen mineralischen anorganischen Füllstoffes oder Füllstoffgemisches.

Die Stärke der Basisfolie beträgt normalerweise von 80 bis 250 µm, vorzugsweise von 100 bis 200 µm und besonders bevorzugt von 120 bis 160 µm. Die Basisfolie wird in der Regel durch Kalandrieren hergestellt, kann aber auch extrudiert sein. Extrudieren schließt alle Verfahren, nämlich Blasfolien-, Gießfolien- und Castfolien-Extrusion, mit ein. Bevorzugt ist die Gießfolienextrusion. Die Schmelze wird über eine Breitschlitzdüse verteilt und durch eine Kühlwalze/Chillwalze abgekühlt. Als Werkzeuge sind Einschnecken- und Mehrschneckenextruder und deren Variationen denkbar. Bevorzugt erfolgt die Herstellung mit einem Einschneckenextruder. Die Basisfolie kann uni- oder bi-direktional verstreckt werden. Dadurch erhält sie eine höhere Dimensionsstabilität gegenüber den Temperaturen während des Auftrags der Schmelzbeschichtung. Zudem wird das Risiko von Mikrorissen in der Schmelzbeschichtung bei einem Ummanteln von Substraten mit der erfindungsgemäßen UV-Schutzfolie minimiert. Durch ein Verstrecken passt sich die Dehnbarkeit der Basisfolie derjenigen der Schmelzbeschichtung an, d.h. sie wird ähnlich gering.

Auf der Basisfolie wird das gewünschte Design aufgedruckt, sofern nicht für Unifarben die Basisfolie eingefärbt ist. Die Basisfolie kann hierbei durchgefärbt sein bzw. bei mehrlagigen Basisfolien kann die oberste Lage durchgefärbt sein. Dies ist für unifarbene Designs bevorzugt. Auch für eine Bedruckung kann durch eine durchgefärbte Basisfolie oder oberste Lage der Basisfolie eine Grundfarbe bereitgestellt werden. Der Designdruck kann auf jede bekannte Art erzielt werden. Besonders brauchbar sind z.B. Tiefdruck, insbesondere mit Lösungsmittelfarben, und Digitaldruck. Als Design sind Holzdekor, Naturstein und Phantasiemuster ebenso möglich, wie Unifarben. Die Druckfarbe wird z.B. durch eine Reihenschaltung an Druckwalzen auf die Basisfolie appliziert. Im Digitaldruck können sowohl Single-Pass als auch Multi-Pass Druckköpfe zur Gestaltung verwendet werden. Die Druckbilder werden oftmals aus mehreren Druckfarben zusammengesetzt und zeichnen sich durch Lichtstabilität aus. Neben lösungsmittelbasierten Druckfarben sind auch solche mit wässriger Basis denkbar.

Die eingesetzten Pigmente zur Durchfärbung der Basisfolie oder deren oberster Lage und zur Erzeugung von Unifarben können organisch und anorganisch sein und den IR-Anteil im Sonnenlicht reflektieren oder transmittieren.

Oberhalb des Drucks werden eine geprägte Zwischenschicht und eine abriebbeständige Schmelzbeschichtung auf Polyurethanbasis aufgebracht. Mit Schmelzbeschichtung auf Polyurethanbasis, auch kurz PUR-Schmelzbeschichtung oder Schmelzbeschichtung genannt, ist im Rahmen der vorliegenden Erfindung eine Reaktivschmelzmasse gemeint, wie sie z.B. in WO 2006/056472 A1, WO 2012/084823 A1, WO 2006/106143 A1 oder US 8,153,265 B2 beschrieben ist. Die Reaktivschmelzmasse kann z.B. durch die Feuchtigkeit der Umgebung reagieren und aushärten, aber auch durch Bestrahlung mit z.B. UV-Licht. Es kann eine ein- oder zweikomponentige Masse sein. Wichtig ist, dass es sich um eine transparente PUR-Schmelzbeschichtung handelt, damit die Farbe bzw. der Druck durch die Schmelzbeschichtung sichtbar bleibt.

Vorzugsweise werden durch die Luftfeuchtigkeit aushärtende ein-komponentige Reaktivschmelzmassen eingesetzt, die ein Polyurethanprepolymer enthalten. Beim Erhitzen verflüssigen sich die Prepolymerketten zu einer applizierbaren Flüssigkeit, die unter Zufuhr von Feuchte zu einer Polyurethanschicht aushärtet.

Zur Steigerung der Abriebfestigkeit enthält die Reaktivschmelzmasse der abriebbeständigen Schmelzbeschichtung Partikel mit entsprechender Härte. Bevorzugt sind als Schleifmittel verwendete Partikel wie Korund, Zirkon, Siliciumcarbid, Bornitrid, Diamant oder Glaspartikel. Insbesondere Korund und Glaspartikel sind aufgrund der Wirtschaftlichkeit bevorzugt.

Die abriebbeständige PUR-Schmelzbeschichtungs-Schicht hat normalerweise eine Stärke von 10 bis 150 µm, vorzugsweise von 20 bis 120 µm und insbesondere von 30 bis 100 µm. Sie kann in an sich bekannter Weise durch Aufstreichen, Aufrakeln, Walzenauftrag etc. aufgebracht werden.

Unter der abriebbeständigen PUR-Schmelzbeschichtung ist eine geprägte Zwischenschicht angeordnet, die ebenfalls aus einer Reaktivschmelzmasse auf Polyurethanbasis gebildet wird, jedoch keinen oder wesentlich weniger Füllstoff als die abriebbeständige PUR-Schmelzbeschichtung enthält. Auch die Zwischenschicht muss transparent sein. Durch die Zwischenschicht ist es besonders einfach möglich, die gesamte PUR-Schmelzbeschichtung blasenfei und damit hochtransparent zu erhalten. Ohne eine füllstofffreie Zwischenschicht können beim Applizieren der PUR-Schmelzbeschichtung Gasbläschen eingetragen werden, welche die Transparenz beeinträchtigen.

Die Stärke der Zwischenschicht richtet sich nach der gewünschten Prägetiefe und der Stärke der PUR-Schmelzbeschichtungs-Schicht und beträgt in der Regel von 10 bis 100 µm, vorzugsweise von 20 bis 80 µm, besonders bevorzugt 30 bis 60 µm.

Der Auftrag der Zwischenschicht kann in gleicher Weise wie der Auftrag der PUR-Schmelzbeschichtung erfolgen, wobei für die Beschichtungen einer Folie gleiche oder unterschiedliche Verfahren benutzt werden können. In einer bevorzugten Ausführungsform wird die Zwischenschicht mittels einer Schlitzdüse, mit oder ohne Rollstab, aufgebracht, und die PUR Schmelzbeschichtungs-Schicht mittels Walzenauftrag. Zweckmäßig wird für die Zwischenschicht die gleiche Reaktivschmelzmasse wie für die abriebbeständige PUR-Schmelzbeschichtung aber ohne Partikel verwendet. Es ist auch möglich, eine andere Reaktivschmelzmasse zu verwenden, z.B. eine strahlenhärtbare Masse für die Zwischenschicht und eine durch Feuchtigkeit aushärtende Masse für die Schmelzbeschichtung. Die Zwischenschicht kann auch als Folie bereitgestellt werden, z.B. als geprägte Folie. Die Zwischenschicht verbessert den UV-Schutz wesentlich, da keine oder wenig Partikel enthalten sind. Ohne die Zwischenschicht könnten Partikel in der PUR-Schmelzbeschichtung bis zur Basisfolie reichen und damit Licht direkt auf das gedruckte Design durchlassen.

Die Prägung der Zwischenschicht erfolgt in an sich bekannter Weise, z.B. mit einem Walzenpaar. Wie ebenfalls bekannt kann das Prägemuster auf das Druckdesign abgestimmt sein und mit diesem korrespondieren. So ist es üblich, dass eine Prägung der Maserung der gedruckten Holzstruktur folgt oder bei einer Fliesenoptik Fugen simuliert.

Typische Prägetiefen betragen von 5 bis 30 µm, vorzugsweise von 10 bis 20 µm. Dies gewährleistet in Kombination mit den Partikeln in der PUR-Schmelzbeschichtungs-Schicht eine ausreichende Rutschhemmung. Üblicherweise werden Rutschsicherheitswerte von mindestens R10 bis R12 nach DIN 51130 bzw. ASR A1.5/1,2 erreicht, vorzugsweise von mindestens R11.

Die obere Schicht wird von einem transparentem Lack und/oder einer abziehbaren Polymerschutzschicht gebildet. Die Folie ist aufgrund der PUR Schmelzbeschichtungsschicht auf der Oberfläche sehr rau. Das ist auch gewünscht um eine hohe Rutschhemmung im nassen Zustand zu erreichen. Eine sehr raue und sehr harte abriebbeständige Oberfläche hat aber den Nachteil, dass sich die Andruckwalzen von Ummantelungs- oder Beschichtungsanlagen in kürzester Zeit abnutzen und der Prozess instabil wird. Reklamationen durch fehlerhafte Beschichtung sind die Folge. Daher wird die Oberfläche der erfindungsgemäßen Schutzfolie von dem Lack oder der Polymerschutzschicht gebildet. Das Aufbringen eines Lackes oder einer Polymerschutzschicht ist auch nötig um die Folie mit der PUR Schmelzmassenbeschichtung sofort aufwickeln zu können. Ansonsten verblockt die Folienrolle, da es normalerweise einige Zeit dauert, bis die aufgetragene(n) Schmelzbeschichtung(en) blockfest ausgehärtet ist(sind). Wenn die Polymerschutzschicht keine zu große Haftung zur PUR-Schmelzmasse aufbaut, kann man die Lackschicht weglassen, das Material ist durch die Schutzschicht aufwickelbar. Ein zusätzlicher Vorteil der Schutzschicht ist ein Schutz der Oberfläche des Bauelementes gegen Verkratzen z.B. durch die rutschhemmende PUR-Schmelzbeschichtung anderer Bauteile. Ein Lack bleibt Teil der erfindungsgemäßen Schutzfolie, die Polymerschutzschicht wird nach Fertigung des Bauelements oder direkt vor bzw. nach seiner Verlegung/Installation abgezogen.

Als Lack sind Acrylatlacke und Polyurethanlacke bevorzugt, insbesondere strahlenhärtbare Lacke. Die Vernetzung des Lacks erfolgt vorzugsweise durch UV- oder LED Strahler. Dies kann durch eine einzelne oder mehrere Quellen geschehen. Die Energieleistung beträgt dabei z.B. 30 W bis 200 W, bevorzugt 50 W bis 180 W, insbesondere 90 W bis 150 Watt.

Der Lack wird zweckmäßig mittels Walzenapplikation oder durch Sprühauftrag appliziert und ggfs. durch Bestrahlung gehärtet. Stärken von 1 bis 50 µm, vorzugsweise von 3 bis 15 µm, besonders bevorzugt von 5 bis 10 µm, haben sich bewährt. Der Lack verbessert zum einen den UV-Schutz, zum anderen stellt er eine Antiblockwirkung bereit, so dass sich die UV Schutzfolie aufwickeln und vor allem problemlos abwickeln lässt. Der Lack hat normalerweise einen niedrigen Glanzgrad von 4 bis 20 Glanzpunkten, vorzugsweise bis 15 Glanzpunkten, gemäß ISO 2813. Die Messung erfolgt mittels eines Goniophometers. Der Messwinkel kann 20°, 35°, 60° (bevorzugt) und 80° oder 85° betragen.

Als Polymerschutzschicht kommt bevorzugt eine Schmelzmasse aus Polyethylen (PE, bevorzugt HDPE) oder aus PE (bevorzugt LDPE im Gemisch mit linearem Polyethylen niederer Dichte, LLDPE) und Ethylenvinylacetat (EVA) zum Einsatz. EVA hat typischerweise einen Vinylacetatgehalt im Bereich von 15 bis 25 Gew.-%.

Die Polymerschutzschicht kann Additive wie Thermostabilisatoren, HALS, UV-Stabilisatoren und ggfs. Füllstoffe enthalten. In einer bevorzugten Ausführungsform sind keine Additive enthalten oder nur UV-Stabilisatoren in geringerer als der üblichen Menge.

Das Material der Polymerschutzschicht zeigt durch Wahl des richtigen Gewichtsverhältnisses von PE zu EVA eine gewünschte Haftung zu der PUR-Schmelzmassenschicht oder dem Lack. Die Haftung soll ausreichen, dass die Polymerschutzschicht sich bis zum Abschluss der Bauelementfertigung nicht wesentlich ablöst. Sie muss gering genug sein, um ein Abziehen der Schutzschicht zu erlauben. Die Mischungsverhältnisse hängen von der eingestellten Oberflächenrauigkeit sowie ggfs. auch von der gewünschten Haftung zum Lack ab. Das Mischungsverhältnis PE:EVA, bezogen auf die Masse, kann je nach gewünschter Haftung von 1:5 bis 5:1, vorzugsweise von 1:1 bis 3:1, betragen. Die Haftung kann auch durch Mischung verschiedener PE beeinflusst werden, so führt eine Zumischung von LLDPE zu einer verstärkten Haftung und gleichzeitig verbesserten Reißfestigkeit, was das Abziehen erleichtert. Auch andere Schmelzmassen, die mit der PUR-Schmelzbeschichtungsschicht oder dem Lack die gewünschte Haftung aufbauen, sind möglich, z.B. Massen die als Schutz für PVCkaschierte Bleche bekannt sind.

Die Polymerschutzschicht kann nach der PUR Schmelzmassenbeschichtung oder nach dem Lackieren auf die raue Oberfläche im Gießbeschichtungsverfahren, Rakelverfahren oder Walzverfahren aufgetragen werden. Bevorzugt ist das Gießverfahren in einen gekühlten Walzenspalt. In diesem Prozess läuft die Schmelzmasse in die Täler und entschärft die abrasive Wirkung. Die den Ummantelungsandruckrollen zugewandte Seite ist vornehmend glatt ausgebildet.

Die Auftragsmenge hängt von der Struktur der rutschhemmenden PUR-Schmelzbeschichtung ab und beträgt von 20 g/m² bis 200 g/m², bevorzugt von 100 g/m² und 150 g/m².

Die Gesamtstärke der UV Schutzfolie ohne Polymerschutzschicht beträgt üblicherweise von 10 bis 150 µm, vorzugsweise von 40 bis 100 µm und besonders bevorzugt von 50 bis 80 µm.

Die erfindungsgemäße UV-Schutzfolie hat vorzugsweise mindestens eine der folgenden Eigenschaften:
- Kratzfestigkeit ≥ 3 N, vorzugsweise ≥ 4 N, nach DIN 15186, bzw. mindestens Klasse A3 nach DIN EN 16094:2012-04 und B3 nach DIN CEN/TS 16611:2014, und/oder
- Abrieb- und Verschleißfestigkeit ≥ 3.000 Umdrehungen, vorzugsweise ≥ 4.000 Umdrehungen nach DIN EN 13329 bzw. ≥ 8.000 Umdrehungen, vorzugsweise 10.000 Umdrehungen nach EN 14354:2017-11, und/oder
- Witterungsbeständigkeit mit mindestens 10.000, vorzugsweise mindestens 15.000, Teststunden nach EN 513 (Verfahren 1 (M)) und dabei eine Mindeststabilität der Farbe von Graumaßstab 3, bewertet nach EN 20105-A02 und/oder
- Rutschfestigkeit erreicht mindestens Klasse R10, was nach DIN 51130:2014 einer Mindestschräge von 10° entspricht, vorzugsweise R11.

Als Substrate kommen Holz, Metall, Kunststoff und Verbundwerkstoffe in Betracht. Das Substrat stellt die notwendigen mechanischen Eigenschaften für das Bauelement bereit. Durch die Beschichtung mit der UV Schutzfolie erfolgt einerseits die gewünschte optische Gestaltung, andererseits wird damit das Substrat auch vor der Witterung geschützt. Kunststoffe altern nicht durch UV-Licht, Metalle korrodieren nicht, Holz bleibt trocken und wird ebenfalls vor UV-Licht geschützt. Die Oberfläche ist leicht zu reinigen und bleibt so wesentlich länger und mit viel weniger Aufwand optisch ansprechend.

Typische Bauelemente sind Bodendielen und -platten für Terassen, Balkone, Wege etc., Paneele, Zaunpfähle und -elemente, Sichtschutzelemente, und Pflanzkästen. Von besonderem Interesse sind gemäß der Erfindung die Bodenbeläge, da diese hohe Anforderungen an die Rutschsicherheit stellen, besonders schnell verschmutzen und eine hohe UV- und mechanische Belastung haben. Bisherige Produkte haben oft die Rutschsicherheit nicht erreicht, wurden durch UV-Licht zu schnell in der Optik verschlechtert und/oder waren den mechanischen Belastungen nicht gewachsen. Delaminierung, besonders an Ecken und Kanten, kam häufig vor.

Die erfindungsgemäß hergestellten Bauelemente haben demgegenüber einen verbesserten UV-Schutz, insbesondere bei Vorliegen der Zwischenschicht, und müssen keine Kompromisse in Sachen Rutschsicherheit machen. Auch die mechanische Belastbarkeit ist verbessert, da die Haftung der Basisfolie auf dem Substrat und der Folienschichten untereinander durch die beschriebenen Maßnahmen optimal ist.

Bekannt für den Einsatz im Außenbereich sind z.B. die Elesgo Folie auf Papierbasis. Bei dieser Folie wird eine mit Acrylat imprägnierte bedruckte Papierfolie mit einem dicken korundhaltigen Acryllack beschichtet. Die oberste Struktur wird durch eine Strukturgeberfolie erzeugt, wobei lediglich Rutschhemmungen im Bereich von R10 zu erreichen sind. Dies ist für ein sicheres Begehen bei Nässe ein geringer Wert. Varianten dieser Folie auf Kunststoffbasis mit einer verbesserten inneren Festigkeit haben aufgrund der identischen Herstellungstechnologie der Beschichtung das gleiche negative Rutschverhalten. Der Prozess ist unter https://laminate.de/index.php/de/technologie2/prozess gezeigt.

Weiterhin sind HPL Compactplatten bekannt, die auf der Basis von Melamin oder Phenolharzgetränkten Papieren erzeugt werden. Viele dieser Produkte haben aufgrund des Druckes eine geringe Lichtbeständigkeit. Die Rutschhemmung dieser Produkte wird über Pressbleche erzeugt, was die Wirksamkeit von eingestreutem Korund in die oberste Papierlage verringert. So wird zwar eine gute Abbriebbeständigkeit erreicht, die Rutschhemmung ist aber eher gering, da die Pressbleche aufgrund des Prozesses sonst schnell verschlissen sind.

Der aktuelle Stand der Technik kennt im horizontalen Außenbereich keine hochwertigen Dekore, wie sie mit dieser Erfindung umgesetzt werden können. Bestehende Systeme scheitern bereits nach wenigen Jahren an dem hohen Anspruch. Bekannte Fehler sind ein Trennen der Schichten, Brechen der Schichten, Ausbleichen und Verändern der Farbe aufgrund der Verwendung ungeeigneter UV-Schutzschichten, schwierige Prozessführung aufgrund zu hoher Steifigkeiten, Begünstigung einer Wasseraufnahme und daraus resultierendes Quellvermögen, mangelnde Haftung zum Trägermaterial.

Weiterhin sind die erfindungsgemäßen UV-Schutzfolien sehr gut zur dekorativen Gestaltung von Schwimmbadabdeckungen geeignet (sog. Rollladensystem). Bisher bekannte Kunststofffolien sind häufig an der fehlenden Witterungsstabilität gescheitert. Bei Kunststofffolien mit einer transparenten Polyacrylatschicht als Witterungsschutz ist deren Eintrübung durch Wasseraufnahme ein Problem. Bei den erfindungsgemäßen UV-Schutzfolien sind dagegen eine gute Stabilität in chlorhaltigem (und auch salzhaltigem) Schwimmbadwasser sowie die notwendige Witterungsstabilität gegeben. Als Substrat sind die bekannten Rolladen-ähnlichen Abdeckungen geeignet mit der Bedingung, dass die Abdeckung schwimmfähig sein muss. Somit sind Segmente aus Holz, Kunststoff und Verbundwerkstoffen bevorzugt, bei den besonders bevorzugten hohlen Segmenten solche aus Kunststoff, Verbundwerkstoffen und Metall.

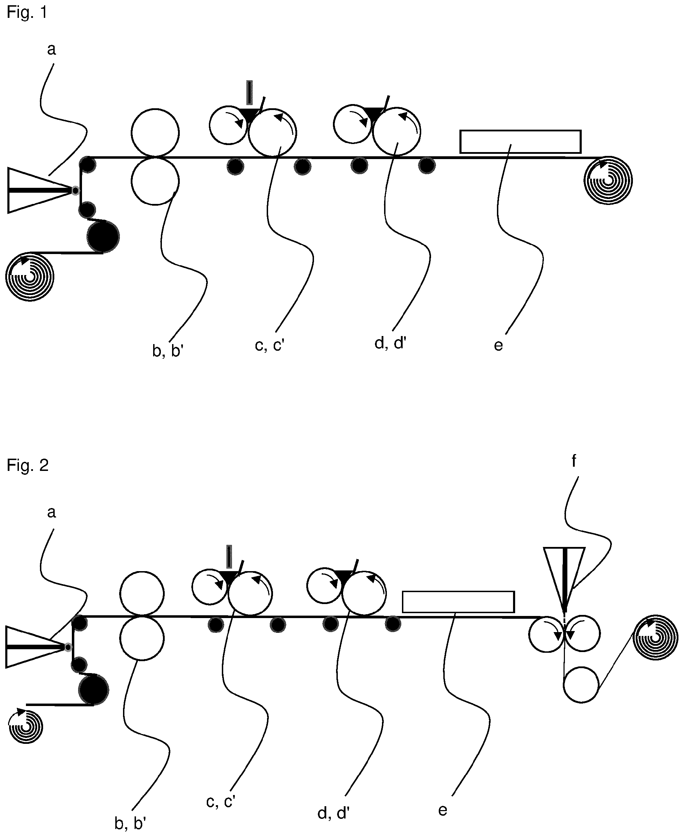

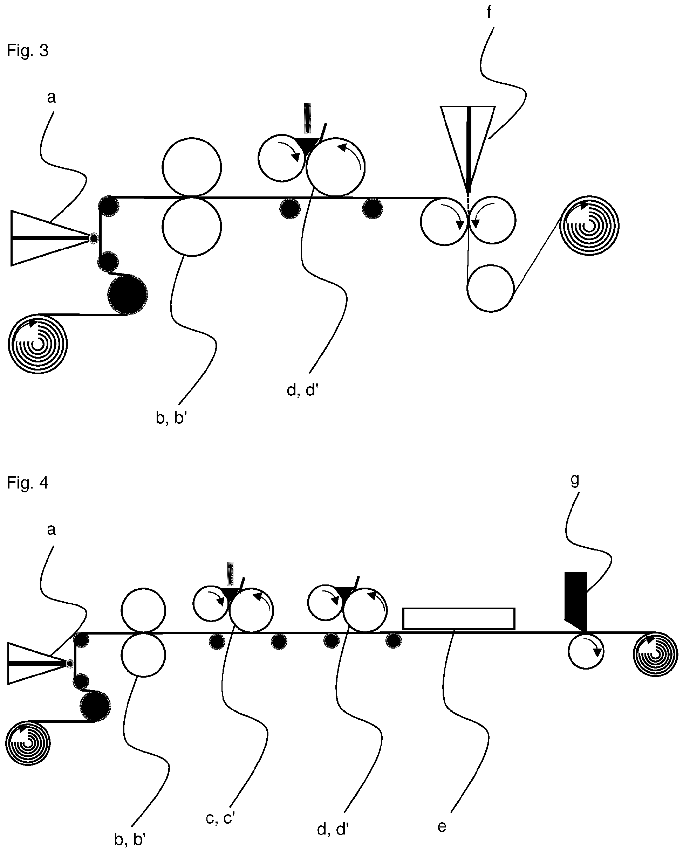

Ausführungsformen des erfindungsgemäßen Verfahrens zur Herstellung der UV Schutzfolie sind in Figuren 1, 2, 4, und 6veranschaulicht. Die in Figur 3, 5 und 7 illustrierten Verfahren liegen nicht im beanspruchten Umfang der Erfindung. Für gleiche Verfahrensabläufe werden gleiche Bezugszeichen für die in den Figuren gezeigten Vorrichtungen verwendet. Bei allen veranschaulichten Verfahren wird eine Basisfolie 1 in an sich bekannter Weise hergestellt (nicht gezeigt), z.B. durch Kalandrieren. Diese Basisfolie 1 wird in ebenso bekannter Weise bedruckt (sofern es sich nicht um eine eingefärbte Folie für einfarbige Bauelemente handelt) und ggfs. unterseitig (unten meint dem Substrat zugewandt) mit einem Primer 5 versehen und/oder bestrahlt. Üblicherweise wird die Basisfolie 1 aufgerollt und eingelagert. Im nächsten Schritt wird die bedruckte (oder eingefärbte) Basisfolie 1 abgerollt und eine Reaktivschmelzmasse auf die Basisfolie 1 oder den Druck D aufgebracht.

In den in Figuren 1, 2, 4 und 6 gezeigten Ausführungsformen wird zunächst eine Zwischenschicht 2 ohne Partikel mittels Schlitzdüse a appliziert. Die Zwischenschicht 2 auf der Basisfolie 1 wird mit einem Walzenpaar b, b' geprägt.

In allen Figuren wird eine abriebbeständige Schmelzbeschichtung auf Polyurethanbasis mit Partikeln als zweite bzw. dritte Schicht 3 mittels Walzen c, c' appliziert. Die erwärmte PUR-Schmelzbeschichtung 3 härtet nach dem Auftrag durch Kontakt mit der Luftfeuchtigkeit aus. Alternativ kann für strahlenhärtende Reaktivschmelzmassen eine Strahlenhärtung vorgesehen sein.

Dann wird in Figuren 1, 2, 4 und 6 der Lack 4, hier ein UV-härtender Acrylatlack, mittels Walzenauftrag durch die Walzen d, d' aufgetragen. Der Lack 4 wird durch UV-Strahlung aus der Strahlungsquelle gehärtet. Die Aushärtung des Lacks erfolgt z.B. durch UV-Lampen, LED-Strahler; ein Excimerlaser oder Excimer-UV-Strahler wird ggf. zusätzlich genutzt, um eine Mattierung und verbesserte Kratzfestigkeit der Oberfläche zu erreichen.

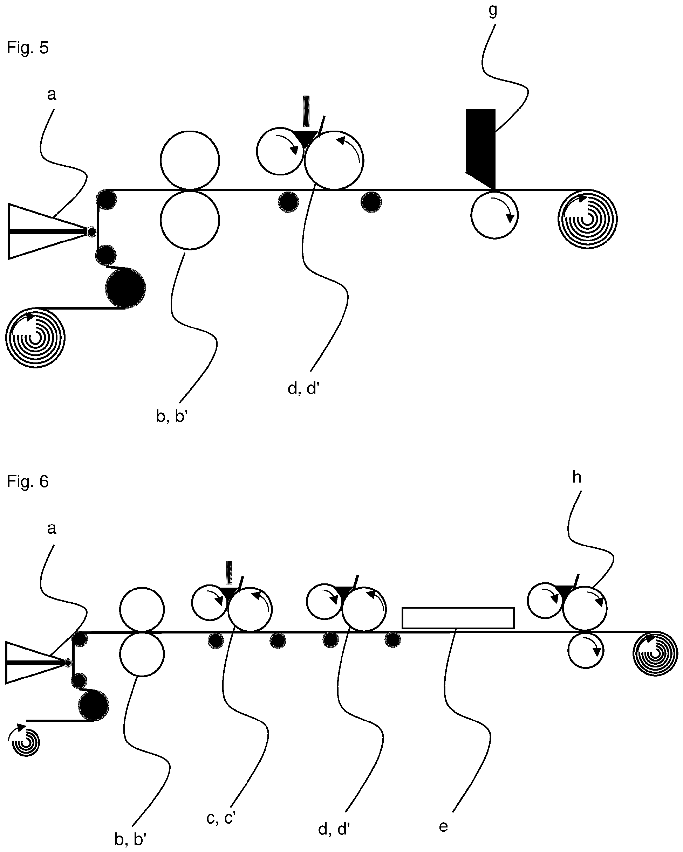

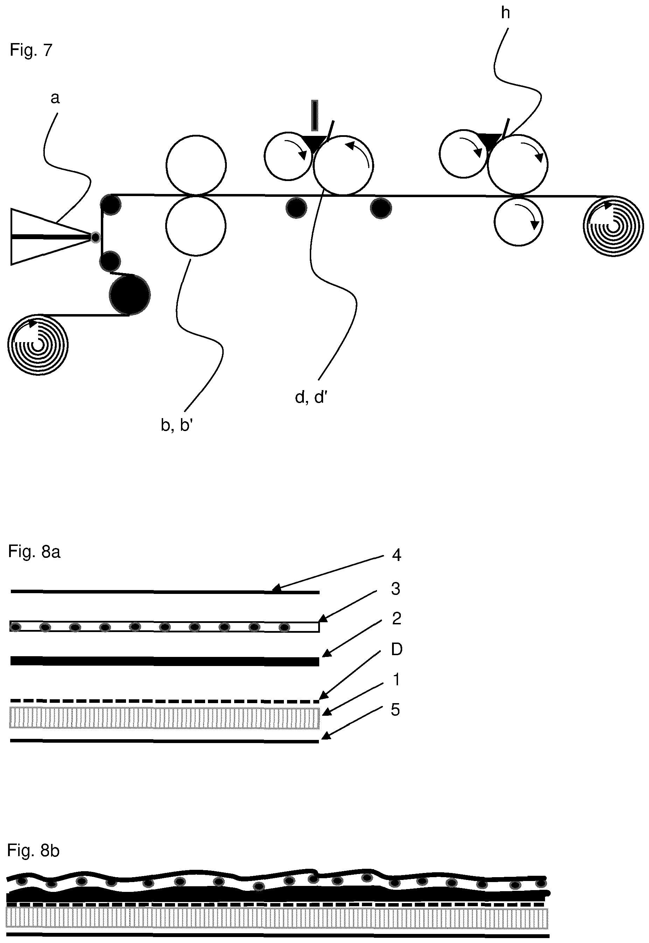

Gemäß Figur 2 wird auf den Lack eine Polymerschutzschicht 6 aufgegossen, gemäß Figur 4 aufgerakelt und gemäß Figur 6 aufgewalzt. In Figur 3 (nicht gemäß der Erfindung) wird die Polymerschutzschicht 6 direkt auf die PUR Schmelzbeschichtung 3 aufgegossen, in Figur 5 (nicht gemäß der Erfindung) aufgerakelt und in Figur 7 (nicht gemäß der Erfindung) aufgewalzt.

Die fertige UV Schutzfolie wird aufgewickelt und ist nach dem Aushärten der Schmelzbeschichtung(en) zum Beschichten von Substraten bereit. Sie umfasst bei den Figuren 1, 2, 4, und 6 eine Zwischenschicht und einen Lack, sowie bei den Figuren 2 bis 7 eine Polymerschutzschicht. Bei Figur 3, 5 und 7 fehlen der Lack und die Zwischenschicht (nicht gemäß der Erfindung), bei Figur 1 eine Polymerschutzschciht.

Die Figuren 8a und 8b zeigen schematisch die Schichten einer ersten bevorzugten UV Schutzfolie getrennt und zusammengebracht. Man erkennt hier, wie die Prägung der Zwischenschicht 2 die Oberflächenstruktur der UV Schutzfolie bestimmt. PUR-Schmelzbeschichtung 3 und Lack 4 folgen der Struktur der Zwischenschicht 2.

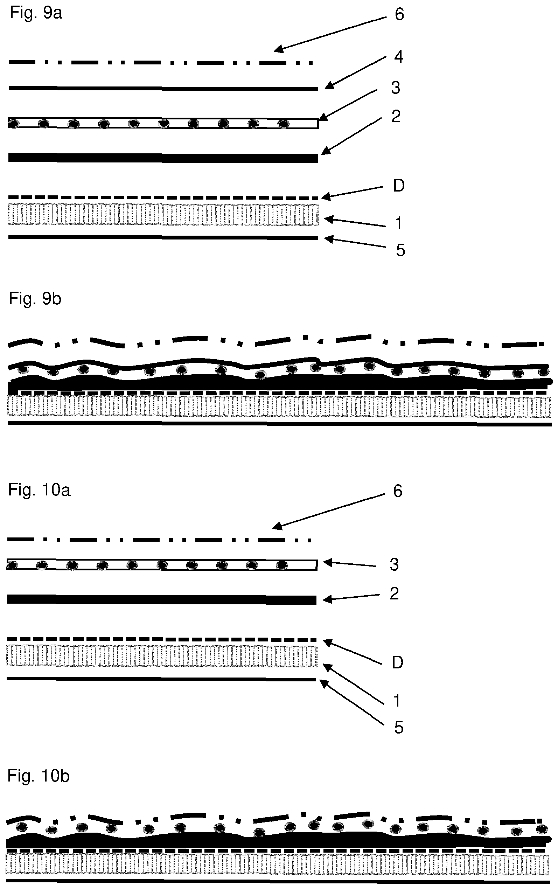

Die Figuren 9a und 9b zeigen schematisch die Schichten einer zweiten bevorzugten UV Schutzfolie getrennt und zusammengebracht. Man erkennt hier, wie die Prägung der Zwischenschicht 2 die Oberflächenstruktur der UV Schutzfolie bestimmt. PUR-Schmelzbeschichtung 3, Lack 4 und Polymerschutzschicht 6 folgen der Struktur der Zwischenschicht 2.

Die Figuren 10a und 10b zeigen schematisch die Schichten einer dritten bevorzugten UV Schutzfolie getrennt und zusammengebracht. Man erkennt hier, wie die Prägung der Zwischenschicht 2 die Oberflächenstruktur der UV Schutzfolie bestimmt. PUR-Schmelzbeschichtung 3 und Polymerschutzschicht 6 folgen der Struktur der Zwischenschicht 2.

Die Erfindung bezieht sich auch auf sämtliche Kombinationen von bevorzugten Ausgestaltungen, soweit diese sich nicht gegenseitig ausschließen. Die Angaben "etwa" oder "ca." in Verbindung mit einer Zahlenangabe bedeuten, dass zumindest um 10 % höhere oder niedrigere Werte oder um 5 % höhere oder niedrigere Werte und in jedem Fall um 1 % höhere oder niedrigere Werte eingeschlossen sind. Soweit nichts anderes angegeben ist oder sich aus dem Zusammenhang zwingend anders ergibt, beziehen sich Prozentangaben auf das Gewicht, im Zweifel auf das Gesamtgewicht der Mischung.

### Bezugszeichenliste

- 1: Basisfolie
- 2: Zwischenschicht
- 3: PUR-Schmelzbeschichtung auf Polyurethanbasis
- 4: Lack
- 5: Primer
- 6: Polymerschutzschicht

- D: Druck
- a: Schlitzdüse mit oder ohne Rollstab
- b, b': Prägewalzenpaar
- c, c': Walzenauftrag PUR-Schmelzbeschichtung
- d, d': Walzenauftrag Lack
- e: Strahlungsquelle
- f: Aufgießen (Direktextrusion) Polymerschutzschicht
- g: Rakelauftrag Polymerschutzschicht
- h: Walzenauftrag Polymerschutzschicht

## Patentansprüche

1. UV Schutzfolie umfassend:
- eine Basisfolie aus Polyvinylchlorid, Polyacrylat oder Polyolefin,
- ein gedrucktes Design und/oder eine Färbung der Basisfolie,
- eine abriebbeständige, transparente Schmelzbeschichtung auf Polyurethanbasis, die Partikel entsprechender Härte enthält, und
- einen Lack und/oder eine Polymerschutzschicht, **dadurch gekennzeichnet, dass** unter der abriebbeständigen Schmelzbeschichtung auf Polyurethanbasis eine geprägte, transparente Zwischenschicht umfassend eine Reaktivschmelzmasse angeordnet ist, die keine oder weniger Partikel enthält als die abbriebbeständige Schmelzbeschichtung auf Polyurethanbasis.

2. UV Schutzfolie gemäß Anspruch 1, **dadurch gekennzeichnet, dass** die Stärke der Zwischenschicht von 10 bis 100 µm, vorzugsweise von 20 bis 80 µm, besonders bevorzugt 30 bis 60 µm, beträgt.

3. UV Schutzfolie gemäß Anspruch 1 oder 2, **dadurch gekennzeichnet, dass** die Basisfolie unterseitig einen Primer aufweist und/oder einer Plasmastrahlung oder Koronabehandlung unterzogen wurde.

4. UV Schutzfolie gemäß einem der Ansprüche 1 bis 3, **dadurch gekennzeichnet, dass** die Basisfolie eine Stärke von 40 bis 250 µm, vorzugsweise von 100 bis 200 µm und besonders bevorzugt von 120 bis 160 µm hat.

5. UV Schutzfolie gemäß einem der Ansprüche 1 bis 4, **dadurch gekennzeichnet, dass** die Partikel ausgewählt sind unter anderem aus Glaspartikeln, als Schleifmittel verwendeten Partikeln und Mischungen davon, vorzugsweise Korund.

6. UV Schutzfolie gemäß einem der Ansprüche 1 bis 5, **dadurch gekennzeichnet, dass** die abriebbeständige Schmelzbeschichtung eine Stärke von 10 bis 150 µm, vorzugsweise von 20 bis 120 µm und insbesondere von 30 bis 100 µm hat.

7. UV Schutzfolie gemäß einem der Ansprüche 1 bis 6, **dadurch gekennzeichnet, dass** der Lack ein Acrylatlack oder ein Polyurethanlack ist, vorzugsweise ein strahlenhärtbarer Acrylat- oder Polyurethanlack.

8. UV Schutzfolie gemäß einem der Ansprüche 1 bis 7, **dadurch gekennzeichnet, dass** der Lack eine Stärke von 1 bis 50 µm, vorzugsweise von 3 bis 15 µm, besonders bevorzugt von 5 bis 10 µm, hat.

9. Verfahren zur Herstellung von beschichteten Bauelementen, **dadurch gekennzeichnet, dass** eine UV Schutzfolie gemäß einem der Ansprüche 1 bis 8 mit einem Substrat laminiert wird.

10. Verfahren gemäß Anspruch 9, **dadurch gekennzeichnet, dass** die UV Schutzfolie mit dem Substrat durch eine Hitzelaminierung oder eine Kleberlaminierung, z.B. mittels Polyurethanhotmeltkleber, laminiert wird.

11. Verfahren gemäß Anspruch 9 oder 10, dadurch gekennzeicnet, dass das Substrat aus Holz, Metall, Kunststoff oder Verbundwerkstoff ist.

12. Verfahren gemäß Anspruch 11, **dadurch gekennzeichnet, dass** das Bauelement ausgewählt ist unter Bodendielen und -platten, Paneelen, Zaunpfählen und -elementen, Sichtschutzelementen, Schwimmbadabdeckungen und Pflanzkästen.

13. Verfahren zur Herstellung von UV Schutzfolien gemäß einem der Ansprüche 1 bis 8, umfassend
- Herstellen einer Basisfolie aus PVC, Polyacrylat oder Polyolefin und Bedrucken der Basisfolie mit einem Design oder Herstellen einer eingefärbten Basisfolie aus PVC, Polyacrylat oder Polyolefin
- Aufbringen einer Schmelzbeschichtung auf Polyurethanbasis auf die Basisfolie oder den Druck
- Aufbringen eines Lacks und/oder einer Polymerschutzschicht wobei die Basisfolie und/oder eine Zwischenschicht unter der Schmelzbeschichtung und/oder die Schmelzbeschichtung geprägt wird, **dadurch gekennzeichnet, dass** eine geprägte Zwischenschicht auf Polyurethanbasis, die keinen oder wesentlich weniger Füllstoff als die Schmelzbeschichtung enthält, unter der Schmelzbeschichtung eingebracht ist.

14. Verfahren gemäß Anspruch 13, **dadurch gekennzeichnet, dass** die Basisfolie im Tiefdruck, insbesondere mit Lösungsmittelfarben, oder im Digitaldruck bedruckt wird.

15. Verfahren gemäß Anspruch 13 oder 14, **dadurch gekennzeichnet, dass** die abriebbeständige Schmelzbeschichtung durch Aufstreichen, Aufrakeln oder Walzenauftrag appliziert wird.

16. Verfahren gemäß einem der Ansprüche 13 bis 15, **dadurch gekennzeichnet, dass** die geprägte Zwischenschicht auf Polyurethanbasis mit einer Schlitzdüse mit oder ohne Rollstab eingebracht ist.

17. Verfahren gemäß einem der Ansprüche 13 bis 16, **dadurch gekennzeichnet, dass** die Prägetiefen von 5 bis 30 µm, vorzugsweise von 10 bis 20 µm, betragen.

18. Verfahren gemäß einem der Ansprüche 13 bis 17, **dadurch gekennzeichnet, dass** der Lack durch Strahlung gehärtet wird und/oder die Polymerschutzschicht durch Aufgießen, Aufrakeln oder Walzenauftrag aufgebracht wird.

## Claims

1. UV protective film comprising:
- a base film of polyvinyl chloride, polyacrylate or polyolefin,
- a printed design and/or colouring of the base film,
- an abrasion resistant, transparent polyurethane based hot melt coating, comprising particles of appropriate hardness, and
- a lacquer and/or a polymer protective layer, **characterized in that** an embossed, transparent intermediate layer comprising a reactive hot melt mass which contains no or fewer particles than the abrasion resistant polyurethane based hot melt coating is arranged under the abrasion resistant polyurethane based hot melt coating.

2. UV protective film according to claim 1, **characterized in that** the thickness of the intermediate layer is from 10 to 100 µm, preferably from 20 to 80 µm, more preferably from 30 to 60 µm.

3. UV protective film according to any one of claims 1 to 2, **characterized in that** the base film has a primer on the underside and/or has been subjected to plasma radiation or corona treatment.

4. UV protective film according to one of claims 1 to 3, **characterized in that** the base film has a thickness from 40 to 250 µm, preferably from 100 to 200 µm and particularly preferred from 120 to 160 µm.

5. UV protective film according to any one of claims 1 to 4, **characterized in that** the particles selected from, inter alia, glass particles, particles used as abrasives and mixtures thereof, preferably corundum.

6. UV protective film according to any one of claims 1 to 5, **characterized in that** the abrasion resistant hot melt coating has a thickness of from 10 to 150 µm, preferably from 20 to 120 µm and more preferably from 30 to 100 µm.

7. UV protective film according to any one of claims 1 to 6, **characterized in that** the lacquer is an acrylate lacquer or a polyurethane lacquer, preferably a radiation-curable acrylate or polyurethane lacquer.

8. UV protective film according to any one of claims 1 to 7, **characterized in that** the lacquer has a thickness of from 1 to 50 µm, preferably from 3 to 15 µm, more preferably from 5 to 10 µm.

9. Method for manufacturing of coated construction elements, **characterized in that** a UV protective film according to any one of claims 1 to 8 is laminated to a substrate.

10. Method according to claim 9, **characterized in that** the UV protective film is laminated to the substrate by heat lamination or adhesive lamination, e.g. by means of polyurethane hot melt adhesive.

11. Method according to claim 9 or 10, **characterized in that** the substrate is made of wood, metal, plastic or composite material.

12. Method according to claim 11, **characterized in that** the construction element is selected from floor boards and slabs, panels, fence posts and fence elements, visual protection elements, swimming pool covers and plant boxes.

13. Method for manufacturing UV protective films according to any one of claims 1 to 8, comprising
- producing a base film from PVC, polyacrylate or polyolefin and printing a design on the base film or producing a coloured base film from PVC, polyacrylate or polyolefin
- applying a polyurethane based hot melt coating to the base film or printing
- applying a lacquer and/or a polymer protective layer
wherein the base film and/or an intermediate layer under the hot melt coating and/or the hot melt coating is embossed, **characterized in that** an intermediate layer containing no filler or substantially less filler than the hot melt coating is introduced under the hot melt coating.

14. Method according to claim 13, **characterized in that** the base film is printed by gravure printing, in particular with solvent inks, or by digital printing.

15. Method according to claim 13or 14, **characterized in that** the abrasion resistant hot melt coating is applied by brushing on, coating on with a doctor blade or roller application.

16. Method according to any one of claims 13 to 15, **characterized in that** the embossed polyurethane based intermediate is applied using a slot die with or without a rolling bar.

17. Method according to any one of claims 13 to 16, **characterized in that** the embossing depths are from 5 to 30 µm, preferably from 10 to 20 µm.

18. Method according to any one of claims 13 to 17, **characterized in that** the lacquer is cured by radiation and/or the polymer protective layer is applied by casting, coating with a doctor blade or roller application.

## Revendications

1. Feuille de protection contre les UV, comprenant :
- une feuille de base en poly(chlorure de vinyle), polyacrylate ou polyoléfine,
- un motif imprimé et/ou une coloration de la feuille de base,
- un revêtement fusible résistant à l'abrasion, transparent, à base de polyuréthane, qui contient des particules de dureté correspondante et
- une laque et/ou une couche de protection polymère,
**caractérisée en ce qu'**une couche intermédiaire transparente, gaufrée, comprenant une masse fusible réactive, qui ne contient pas de particules ou qui contient moins de particules que le revêtement fusible résistant à l'abrasion à base de polyuréthane, est agencée sous le revêtement fusible, résistant à l'abrasion, à base de polyuréthane.

2. Feuille de protection contre les UV selon la revendication 1, **caractérisée en ce que** l'épaisseur de la couche intermédiaire est de 10 à 100 µm, de préférence de 20 à 80 µm, de manière particulièrement préférée de 30 à 60 µm.

3. Feuille de protection contre les UV selon la revendication 1 ou 2, **caractérisée en ce que** la feuille de base, sur la face inférieure, présente un apprêt et/ou a été soumise à un rayonnement de plasma ou à un traitement corona.

4. Feuille de protection contre les UV selon l'une des revendications 1 à 3, **caractérisée en ce que** la feuille de base présente une épaisseur de 40 à 250 µm, de préférence de 100 à 200 µm et de manière particulièrement préférée de 120 à 160 µm.

5. Feuille de protection contre les UV selon l'une des revendications 1 à 4, **caractérisée en ce que** les particules sont choisies entre autres parmi les particules de verre, les particules utilisées comme abrasifs et leurs mélanges, de préférence le corindon.

6. Feuille de protection contre les UV selon l'une des revendications 1 à 5, **caractérisée en ce que** le revêtement fusible résistant à l'abrasion présente une épaisseur de 10 à 150 µm, de préférence de 20 à 120 µm et en particulier de 30 à 100 µm.

7. Feuille de protection contre les UV selon l'une des revendications 1 à 6, **caractérisée en ce que** la laque est une laque d'acrylate ou une laque de polyuréthane, de préférence une laque d'acrylate ou de polyuréthane durcissable par un rayonnement.

8. Feuille de protection contre les UV selon l'une des revendications 1 à 7, **caractérisée en ce que** la laque présente une épaisseur de 1 à 50 µm, de préférence de 3 à 15 µm, de manière particulièrement préférée de 5 à 10 µm.

9. Procédé pour la fabrication d'éléments de construction revêtus, **caractérisé en ce qu'**une feuille de protection contre les UV selon l'une des revendications 1 à 8 est stratifiée avec un substrat.

10. Procédé selon la revendication 9, **caractérisé en ce que** la feuille de protection contre les UV est stratifiée avec le substrat par une stratification à chaud ou une stratification de collage, par exemple au moyen d'une colle thermofusible de polyuréthane.

11. Procédé selon la revendication 9 ou 10, **caractérisé en ce que** le substrat est en bois, en métal, en matériau synthétique ou en matériau composite.

12. Procédé selon la revendication 11, **caractérisé en ce que** l'élément de construction est choisi parmi les planches et les dalles de plancher, les panneaux, les poteaux et les éléments de clôture, les éléments de protection visuelle, les recouvrements de piscine et les jardinières.

13. Procédé pour la fabrication de feuilles de protection contre les UV selon l'une des revendications 1 à 8, comprenant
- la fabrication d'une feuille de base en PVC, polyacrylate ou polyoléfine et l'impression de la feuille de base par un motif ou la fabrication d'une feuille de base colorée en PVC, polyacrylate ou polyoléfine,
- l'application d'un revêtement fusible à base de polyuréthane sur la feuille de base ou l'impression,
- l'application d'une laque et/ou d'une couche de protection polymère la feuille de base et/ou une couche intermédiaire sous le revêtement fusible et/ou le revêtement fusible étant gaufré(e)(s), **caractérisé**
**en ce qu'**une couche intermédiaire gaufrée à base de polyuréthane qui ne contient pas de charge ou qui contient sensiblement moins de charge que le revêtement fusible, est introduite sous le revêtement fusible.

14. Procédé selon la revendication 13, **caractérisé en ce que** la feuille de base est imprimée par héliogravure, en particulier avec des encres solvatées, ou par impression numérique.

15. Procédé selon la revendication 13 ou 14, **caractérisé en ce que** le revêtement fusible résistant à l'abrasion est appliqué par enduction, raclage ou application au rouleau.

16. Procédé selon l'une des revendications 13 à 15, **caractérisé en ce que** la couche intermédiaire gaufrée à base de polyuréthane est introduite à l'aide d'une filière à fente avec ou sans barre rotative.

17. Procédé selon l'une des revendications 13 à 16, **caractérisé en ce que** les profondeurs de gaufrage sont de 5 à 30 µm, de préférence de 10 à 20 µm.

18. Procédé selon l'une des revendications 13 à 17, **caractérisé en ce que** la laque est durcie par rayonnement et/ou la couche de protection polymère est appliquée par coulée, raclage ou application au rouleau.
